# EUROPÄISCHE PATENTANMELDUNG

(11) **EP 0 830 048 A2**
(43) Veröffentlichungstag der Anmeldung: **18.03.1998**
(21) Anmeldenummer: 97110342.9
(22) Anmeldetag: 25.06.1997
(51) Int. Cl.: H04Q 11/04

(54) **Verfahren zum Füllen von Datenpaketen vorgegebener Länge**

(30) Priorität: 13.09.1996 DE 19637523
(71) Anmelder: ROBERT BOSCH GMBH, 70442 Stuttgart (DE)
(72) Erfinder: Vogel, Peter, 31139 Hildesheim (DE)

(57) **Zusammenfassung**

Es wird ein Verfahren zum Füllen von Datenpaketen mit Information vorgeschlagen, das durch bitweises Einfüllen von Daten bei festen Datenpaketlängen eine geringere Anzahl an Stopfbits benötigt und daher eine bessere Ausnutzung der Bandbreite erlaubt.

## Beschreibung

### Stand der Technik

Die Erfindung geht aus von einem Verfahren zum Füllen von Datenpaketen vorgegebener Länge mit Informationen einer Datenquelle nach der Gattung des Hauptanspruchs.

Es sind bereits Verfahren zum Füllen von Datenpaketen fester Länge bekannt, die über fehlerbehaftete Leitungen übertragen werden sollen. Die Gesamtlänge L für ein Datenpaket des 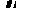 Adaptation Layer", bestehend aus Header und fehlergeschütztem (codiertem) Datenfeld, ist fest vorgegeben. Das fehlergeschützte (codierte) Datenfeld bezeichnet den Bereich, in den die Information der Datenquellen eingefüllt wird, nachdem sie den Faltungscoder durchlaufen hat.
Die vor der Codierung maximal einzufüllende Datenmenge beträgt tₘₐₓ und ist für das aktuelle Paket ebenfalls fest vorgegeben. Ist zu wenig Information der Datenquellen vorhanden, so wird in einem Bereich des Datenfelds, im 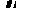 Stuffingfield" mit Füllbytes bis auf die Länge tₘₐₓ aufgefüllt. Da sowohl von den Daten als auch von den Füllbytes jeweils nur Vielfache von 8 Bit eingefüllt werden dürfen, sind nur bestimmte Längen für die Kombination aus Füllbytes und Daten mit zugehörigem Fehlerschutz möglich. Da auch der Header eine vorgegebene Länge aufweist, ist es i.d.R. nicht möglich, genau soviel Informationen einzufüllen, daß exakt die Länge L erreicht wird. Daher wird im Stand der Technik das Feld BSTUF definiert, das mit Stopfbits gefüllt wird, um auf die Länge L aufzufüllen. Durch diesen Füllmechanismus wird normalerweise eine große Bandbreite für Füllinformationen verschwendet.

### Vorteile der Erfindung

Das erfindungsgemäße Verfahren mit den kennzeichnenden Merkmalen des Hauptanspruchs hat demgegenüber den Vorteil, daß die Forderung Quelldaten byteweise in das uncodierte Datenfeld zu füllen, aufgehoben wird und eine bitweise Füllung zugelassen ist. Um die nach wie vor bestehende feste Länge des Datenpaketes zu erreichen, werden zu den Füllbotschaften von n Bit noch Füllbits in einem speziellen Feld hinzugefügt. Durch das erfindungsgemäße Verfahren wird die Menge der Füllinformation reduziert, und damit die Bandbreite, die zur Übertragung der Füllinformation verwendet werden muß.

Durch die in den Unteransprüchen aufgeführten Maßnahmen ist eine vorteilhafte Weiterbildung und Verbesserung des im Hauptanspruch angegebenen Verfahrens möglich.

Vorteilhafterweise wird an das uncodierte Datenfeld ein Feld angehängt, in dem 1 bis 7 Füllbits bis zum Erreichen der festen Länge tₘₐₓ eingetragen werden.

Um die Datenübertragung von Datenpaketen, die Füllinformationen enthalten, bandbreiteneffizient zu gestalten ist es von Vorteil, ein Feld einzufügen, das anzeigt wieviel Bits im letzten Byte des uncodierten Datenfeldes für Informationen benutzt werden.

Alternativ ist es von Vorteil in einem solchen Feld anzuzeigen, wieviele Bits im letzten Byte des uncodierten Datenfeldes gestopft werden.

Eine weitere vorteilhafte Ausbildungsform des Verfahrens fügt ein Zählerfeld STC ein, das anzeigt, wieviele Bits insgesamt im Datenfeld gestopft werden.

Dabei ist es vorteilhaft, daß das STC Feld mit einem getrennten Fehlerschutz versehen wird, der eine schnelle Dekodierung und Verarbeitung der Dateninhalte ermöglicht. Dabei wird vorteilhafterweise einn BCH-Code oder Reed-Solomon Code verwendet.

Vorteilhafter Weise werden die Felder, die Informationen über die Art und die Menge der Füllinformation vermitteln in die Fehlerschutzmaßnahmen des Datenpaketes eingeschlossen, bzw. mit seperatem Fehlerschutz versehen.

### Zeichnung

Ausführungsbeispiele der Erfindung sind in den Zeichnungen dargestellt und in der nachfolgenden Beschreibung näher erläutert. Es zeigt Figur 1 den schematischen Aufbau der Struktur der Datenebenen für die Multiplexübertragung, Figur 2 die Gestaltung der Datenpakete am Beispiel des Adaptations Layers, Figur 3 das Auffüllen eines Informationsfeldes, Figur 4 die erfindungsgemäße Ausgestaltung mit einem Feld BST, Figur 5 ein Datenpaket mit dem Feld UB, Figur 6 eine weitere Anordnung mit Feld UB und Figur 7 eine Ausführungsform mit dem Stopffeld STC.

### Beschreibung der Ausführungsbeispiele

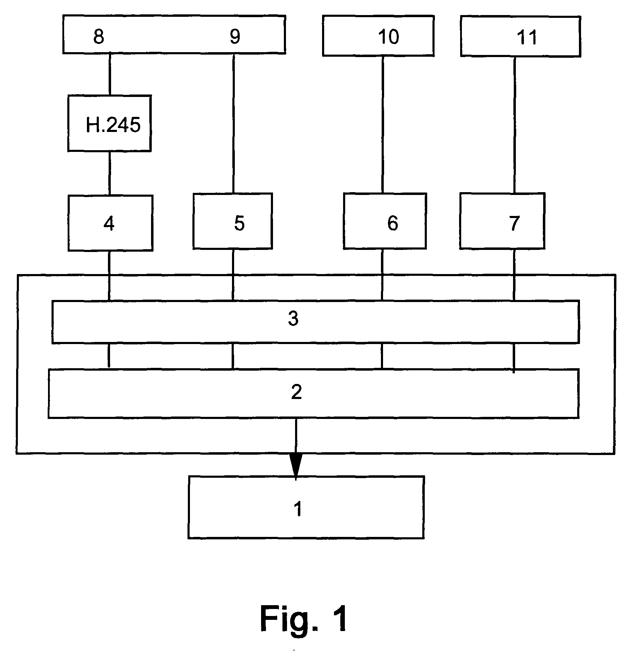

Die Datenübertragung von beliebigen Datensignalen findet nach Figur 1 über hierarchisch gegliederte Ebenen statt. Von den einzelnen Datenendgeräten kommen die zum Teil analogen Signale über die Anwendungsebene 8, 9, 10, 11 zur Kodierungsebene 4, 5, 6, 7. Anschließend werden die Inhalte der logischen Kanäle an die Adaptationsebene 3 des Multiplexers weitergegeben. Immer noch in getrennten logischen Kanälen werden die Daten an die Multiplexebene 2 weitergereicht. Diese Ebene verarbeitet die Vielzahl an logischen Kanälen zu einem logischen Kanal und gibt Multiplex-PDUs (Mux-PDUs) aus. Jede Mux-PDU wird nach dem Protokoll mit Informationen der Quellen gefüllt. Typische Quellen für das Datenübertragungsverfahren sind z. B. Audioquellen 10, Videoquellen 11, die in der Kodierungsebene kodiert werden. Zusätzlich zu den einzelnen Datenquellen existiert ein Kontrollkanal 4, der die Spezifikation des Protokolls vorgibt. Der Standard für den Kontrollkanal wird in unserem Beispiel mit H.245 bezeichnet.

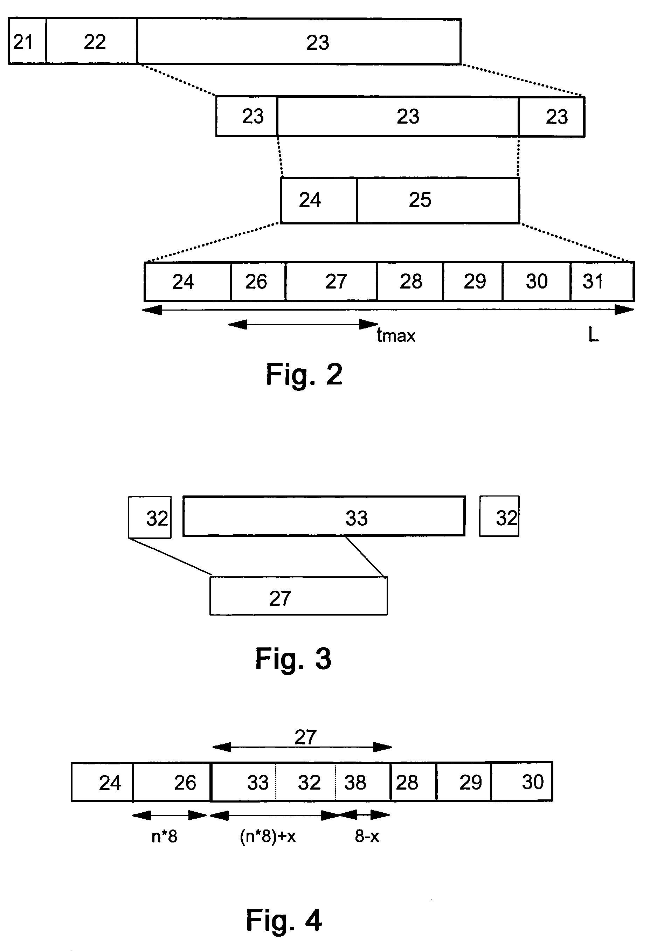

Figur 2 zeigt das allgemeine Format eines Multiplexpaketes, wie es in der Multiplexebene 2 und Adaptationsebene 3 zusammengestellt wird. Das Multiplexpaket besteht aus einem Synchronisationswort 21, dem Header 22 und dem Informationsfeld 23 ( 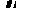 payload"). Im Header des Multiplexpaketes werden Angaben über die weitere Verarbeitung des Informationsfeldes weitergegeben. Im Informationsfeld 23 des Multiplexpaketes werden die auf der Adaptationsebene 3 gepackten Quellenpakete untergebracht. Die Quellenpakete können aus verschiedenen Datenquellen stammen und sie können verschiedene Längen aufweisen. Die einzelnen Quellenpakete bestehen wiederum aus einem Header 24 und dem Informationsfeld 25. Die Gesamtlänge L ist für das Quellenpaket vorgegeben. Das Feld 27 ist das 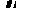 AL-PDU PayLoad"-Feld, und symbolisiert die Datenmenge, die von der Datenquelle eingefüllt wird. Die maximal einzufüllende Datenmenge beträgt tₘₐₓ und ist fest vorgegeben. Die Länge des 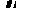 Stuffingfield" 26 ist variabel und hängt von tₘₐₓ und der verfügbaren Datenmenge, die im Feld 27 eingefüllt wird, ab. Die Felder 26 und 27 mit der Gesamtlänge tₘₐₓ werden im folgenden als Datenfeld bezeichnet. Ist zu wenig Information der Quelle vorhanden, so werden im Feld 26 Füllbytes bis auf die Länge tₘₐₓ aufgefüllt. Das AL-PDU Payload Feld wird mit Hilfe eines fehlerkorrigierenden Codes (Forward Error Correction, FEC, 30) geschützt. Feld 30 stellt den Fehlerschutz der Felder 26 bis 29 symbolisch dar. Bei dem im H.223/A verwendeten Fehlerschutz wird eine Folge von Eingangsbits in eine Folge von Codebits überführt ( 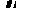 Faltungscoder"). Das bedeutet, daß in H.223/A der Fehlerschutz nicht als seperater Block existiert, sondern unmittelbar mit den Informationen der Felder 26 bis 29 verschmolzen ist. Das Payload Feld 27, auch als uncodiertes Datenfeld bezeichnet, symbolisiert also die Datenmenge, die von der Datenquelle an den Faltungscoder geliefert wird, um anschließend zu einer fehlergeschützten Sequenz verarbeitet zu werden.
Da in das Stuffing Field 26 und in das Payload Feld 27 , also in das Datenfeld, nach dem Stand der Technik nur Vielfache von 8 Bit eingefüllt werden dürfen, sind nur bestimmte Längen für das Payload Feld mit zugehörigem Fehlerschutz möglich. Da die Felder Header 24, CRC 28 und TB 29 (Tail bits) feste Längen aufweisen, ist es i. d. R. nicht möglich, genausoviele Informationen in das Payload Feld einzufüllen, daß exakt die Länge L erreicht wird. Daher mußte bisher das Feld BSTUF 31 für Stopfbits benutzt werden, um auf die Länge L aufzufüllen. Die in das Payload Feld 27 einzufüllende uncodierte Datenmenge wird in einem speziellen Rahmenformat gemäß Figur 3 geliefert. Diese Rahmen 33 AL-SDU (Adaptation Layer Service Data Units) werden mit Hilfe von Flags 32 voneinander getrennt. Anhand der Flags werden die Rahmen im Empfänger wieder zusammengesetzt. Eine fälschliche Detektion eines Flags 32 innerhalb einer AL-SDU wird dadurch verhindert, daß nach jeder Kombination von fünf aufeinanderfolgenden 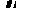 1"Bits ein spezielles Stopfbyte im AL-PDU Payload Feld 27 eingefüllt wird. Dadurch können im Payload Feld 27, außer in den Flags und den Stopfbytes, keine weiteren sechs aufeinanderfolgenden 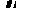 1"Bits auftreten.

In Figur 4 wird eine Möglichkeit zum Füllen der Datenpakete nach dem erfindungsgemäßen Verfahren vorgestellt. Zunächst wird die Bytebeschränkung für die in das das Payload Feld 27 einzufüllende Information aufgehoben, d. h., daß jede beliebige Anzahl von Informationsbits in das Feld eingefüllt werden darf. Insgesamt steht für das Payload Feld 27 sowie den Bereich des Stuffing Field 26 die maximale bekannte Länge tₘₐₓ als Datenfeld zur Verfügung. Der Bereich 27 wird solange mit Datenrahmen 33 und Flags 32 gefüllt, bis keine Daten mehr vorhanden sind, oder das Feld komplett gefüllt ist. Das Auffüllen der letzten 0 bis 7 Bit des Payload Feldes 27 erfolgt nach folgender Regel: Nach dem letzten eingefüllten Flag 32 im Payload Feld 27 werden nur dann weitere Informationsbits eingefüllt, wenn noch mindestens 8 Bit zur Verfügung stehen. Sind 7 oder weniger Bits im Payload Feld 27 übrig, so werden Stopfbits eingefüllt. Die Stopfbits werden im Feld BST 38 eingefüllt.

Der Empfänger sucht die Flags im Payload Feld. Die einem Flag nachfolgende Information wird nur dann benutzt, wenn noch mindestens 8 Bit im Payload Feld vorhanden sind.

Figur 4 zeigt ein Beispiel, bei dem nicht genug Daten vorhanden sind, um das Datenfeld zu füllen. Es werden (nx8)+3 Bits bestehend aus Rahmendaten 33 und anschließend Flag 32 eingefüllt. Damit stehen nach dem letzten Flag 32 noch 5 Bit bis zur nächsetn 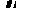 Byte-Grenze" zur Verfügung. Daher werden fünf Stopfbits 38 eingefüllt. Die darüber hinausgehende fehlende Information wird im Stuffingfield 26 in Form ganzer Bytes eingefüllt. Das Verfahren läßt sich auch für andere paketorientierte Übertragungsverfahren mit festen Datenpaketlängen benutzen. Die eingefüllten Stopfbits werden vorteilhafterweise mit einem Fehlerschutz, z. B. FEC 30 und CRC 28 zu versehen.

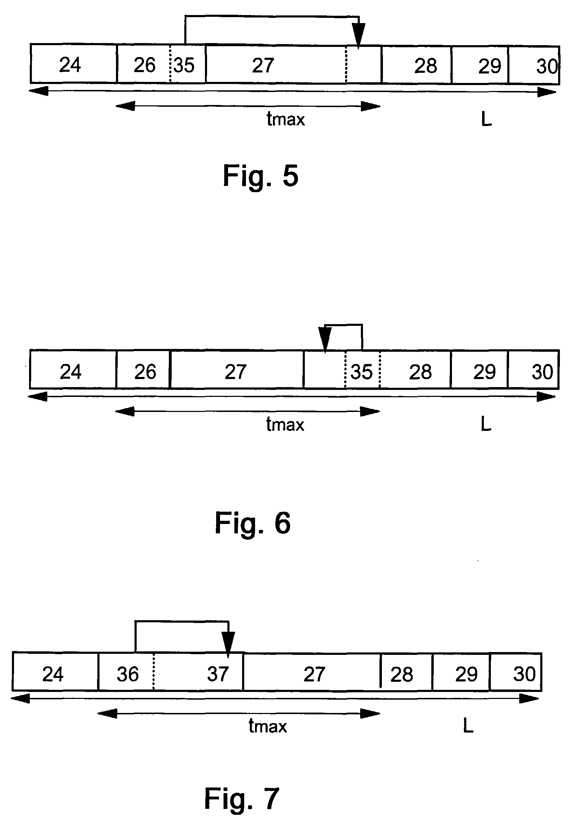

Eine weitere Ausführungsform für das Füllen von Datenpaketen mit Füllinformationen wird in Figur 5 dargestellt. Dazu wird das Stuffingfield 26 um ein Feld UB 35 ergänzt. Das Stuffingfield 26 wird mit Füllbotschaften in der Form von n aufeinander folgenden Nullbits gefüllt, wobei n eine vorher festzulegende Zahl ist, vorteilhafterweise 8. Jede Botschaft von n aufeinander folgenden Nullen besagt, daß noch mindestens eine weitere Füllbotschaft folgt. Wird eine Füllbotschaft mit n aufeinanderfolgenden 1-Bits eingefüllt, wird damit signalisiert, daß es die letzte Füllbotschaft im aktuellen Stuffing Filed 26 ist. Hinter der 1-Botschaft wird jetzt noch ein weiteres Feld UB 35 eingefügt. Aus diesem Feld ergibt sich, wieviel Bits im letzten Byte des Payload Feldes 27 tatsächlich benutzt werden. Das Feld UB 35 kann spezifizieren, wieviel Bits im letzten Byte des Payload Feldes benutzt werden, oder wieviel Bits im letzten Byte des Payload Feldes gestopft werden. Das Feld UB 35 besteht im einfachsten Fall aus 3 Bit, so daß ein Wertebereich von 0 bis 7 signalisiert werden kann. Da die Information des Feldes UB von Bedeutung für die Verarbeitung des Datenpaketes ist, sollte es mit einem Fehlerschutz versehen sein. Es kann z. B. in den CRC-Code oder den FEC-Code miteinbezogen werden.

In einer weiteren Ausführungsform besteht die Möglichkeit, das Feld UB 35 für jedes Payload Feld 27, also unabhängig vom Stuffingfield 26 zu spezifizieren. Dazu kann das UB-Feld 35 an den Beginn oder das Ende des Payload Feldes 27 gesetzt werden, wie in Figur 6 gezeigt.

Figur 7 zeigt eine weitere Ausführungsform des erfindungsgemäßen Füllverfahrens. Es wird ein neues Feld STC 36 eingeführt. Dieses Feld besteht z. B. aus 16 Bit, so daß ein großer Wertebereich spezifiziert werden kann. Damit kann die genaue Anzahl von Bits 37, die in einem Payload Feld gestopft werden müssen, signalisiert werden. Man benötigt also nicht mehr 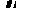 Stuffingfield" und BSTUF-Feld zur Signalisierung, sondern nur den STC-Zähler 36. Der STC-Zähler sollte besonders geschützt werden. Dazu kann z. B. der FEC-Code des Payload Feldes 27 benutzt werden. Es ist ebenfalls möglich den STC-Zähler in den CRC-Schutz des Payload Feldes einzubeziehen, um so einen Schutz durch Retransmission zu erhalten. Besonders vorteilhaft ist es den STC Zähler mit einem separaten Fehlerschutz, z.B. BCH-Code oder Reed-Solomon Code zu versehen. In diesem Fall ist es möglich, den STC-Zähler sofort zu dekodieren. Die STC-Informtion ist sofort nutzbar, so daß das gesamte Stuffing Filed 37 als Ganzes übersprungen wrden kann.

Alle hier vorgestellten Verfahren haben den Vorteil, daß wesentlich weniger Bandbreite für Füllinformationen verloren geht. Da die Forderung nach byteorientierten Payload Feldern aufgegeben wird, kann das aus dem Stand der Technik bekannte Bytestopfen nach 5 aufeinanderfolgenden 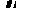 1"-Bits durch Bitstopfen ersetzt werden. Dazu kommt, daß ein einheitliches Stuffing Field einfacher und übersichtlicher ist, als eine Aufteilung in separate Felder, nämlich Stuffing Field und BSTUF.

## Patentansprüche

1. Verfahren zum Füllen von Datenpaketen vorgegebener Länge L mit Informationen einer Datenquelle, wobei die Datenpakete aus einem Header (24) und einem codierten Datenfeld (25) bestehen, und ein zunächst uncodiertes Datenfeld (27) im Falle fehlender Quelldaten mit Füllbotschaften (26) bis zur vorgegebenen Länge (tₘₐₓ) aufgefüllt wird, dadurch gekennzeichnet, daß das uncodierte Datenfeld (27) bitweise mit Quelldaten der Datenquelle und aufeinanderfolgenden Füllbotschaften der Länge n Bit (26) gefüllt und die vorgegebene Länge des Datenfeldes (tₘₐₓ) durch Zufügen von Füllbits (38) erreicht wird.

2. Verfahren zum Füllen von Datenpaketen vorgegebener Länge mit Informationen nach Anspruch 1, dadurch gekennzeichnet, daß das uncodierte Datenfeld (27) zunächst mit Füllbotschaften gefüllt wird und an die Quelldaten ein Feld BST (38) mit 1 bis 7 Füllbits angehängt wird.

3. Verfahren zum Füllen von Datenpaketen vorgegebener Länge mit Informationen nach Anspruch 1 oder 2, dadurch gekennzeichnet, daß nach Auftreten eines eindeutigen Signalisierungsmusters (32) innerhalb der Quelldaten (32, 33) des aktuellen Datenfelds mit Quelldaten aufgefüllt wird, wenn noch mindestens 8 Bits zur Verfügung stehen.

4. Verfahren zum Füllen von Datenpaketen vorgegebener Länge mit Informationen nach Anspruch 1 bis 3, dadurch gekennzeichnet, daß nach Auftreten eines eindeutigen Signalisierungsmusters (32) innerhalb der Quelldaten (32,33) des aktuellen Datenfelds in die letzten 1 bis 7 Bits des Datenfeldes Stopfbits BST (38) eingefügt werden, wenn weniger als 8 Bits zur Verfügung stehen.

5. Verfahren zum Füllen von Datenpaketen vorgegebener Länge mit Informationen nach Anspruch 1 bis 4, dadurch gekennzeichnet, daß vor oder nach den Quelldaten (27) ein Feld UB (35) eingefügt wird, das anzeigt, wieviele Bits im letzen Byte der Quelldaten benutzt werden.

6. Verfahren zum Füllen von Datenpaketen mit Informationen nach Anspruch 1 bis 4, dadurch gekennzeichnet, daß vor oder nach den Quelldaten (27) ein Feld (35) eingefügt wird, das anzeigt, wieviele Bits im letzen Byte der Quelldaten gestopft werden.

7. Verfahren zum Füllen von Datenpaketen mit Informationen nach Anspruch 1 bis 4, dadurch gekennzeichnet, daß vor den Quelldaten (27) ein Feld STC (36) eingefügt wird, das anzeigt, wieviele Bits (37) der Quelldaten insgesamt gestopft werden.

8. Verfahren zum Füllen von Datenpaketen mit Informationen nach Anspruch 1 bis 4, dadurch gekennzeichnet, daß das Feld STC (36) einen separaten Fehlerschutz erhält, vorzugsweise einen BCH-Code oder einen Reed-Solomon-Code.

9. Verfahren zum Füllen von Datenpaketen mit Informationen nach Anspruch 1 bis 8, dadurch gekennzeichnet, daß die Felder BST, UB oder STC in die Fehlerschutzmaßnahmen des Datenpaketes einbezogen werden.
